# DEMANDE DE BREVET EUROPEEN

(11) **EP 0 759 352 A1**
(43) Date de publication de la demande: **26.02.1997**
(21) Numéro de dépôt: 96490033.6
(22) Date de dépôt: 07.08.1996
(51) Int. Cl.: B29C 51/12, B60R 13/02

(54) **Procédé de fabrication d'un panneau multicouche constitué d'un insert et d'une peau présentant plusieurs pièces de nature différente**

(30) Priorité: 07.08.1995 FR 9509745
(71) Demandeur: REYDEL, 59147 Gondecourt (FR)
(72) Inventeur: Duriez, Dominique, 59147 Gondecourt (FR); Mütterlein, Stéphane, 59147 Gondecourt (FR)
(74) Mandataire: Duthoit, Michel

(57) **Abrégé**

La présente invention concerne un procédé de fabrication d'un panneau multicouche, notamment destiné à l'habillage intérieur des carrosseries de véhicules, constitué d'un insert (2) et d'une peau (3), ledit panneau présentant au moins en partie des déformations (4) en creux et/ou en bosse, plus ou moins importantes, suivant un profil déterminé, dans lequel on met en oeuvre un moule (9) comprenant au moins deux parties (10, 11).

Selon l'invention,
- on prévoit ladite peau (3) en au moins deux pièces de nature différente, au voisinage l'une de l'autre, et :
- on préforme préalablement au moins la ou lesdites pièces (5, 6, 7) prévues au niveau desdites déformations, sensiblement suivant ledit profil déterminé,
- on place la ou lesdites pièces (5, 6, 7) préformées dans ledit moule (9), au moins au niveau d'une zone prédéterminée (12) localisée en fonction desdites déformations,
- on place la ou les éventuelles autres pièces de ladite peau (3) dans ledit moule (9),
- on place ledit insert (2), prévu déformable, sous ladite peau (3),
- on comprime ledit insert (2) contre ladite peau (3),

de manière à obtenir un panneau multicouche dont les différentes pièces (5, 6, 7) de la peau (3) épousent parfaitement I'insert (2) tout le long de son profil.

## Description

La présente demande concerne un procédé de fabrication d'un panneau multicouche, notamment destiné à l'habillage intérieur des carrosseries de véhicules.

De manière générale, elle trouvera ses applications, par exemple, dans tous les domaines de l'activité économique dans lesquels on souhaite fabriquer et/ou utiliser des surfaces habillées de revêtement, notamment agréables au toucher et/ou présentant un aspect esthétique.

Actuellement, en ce qui concerne la fabrication de panneaux multicouches, on connaît différents procédés permettant d'obtenir un insert recouvert d'une peau.

Suivant un premier mode de réalisation, la peau est, par exemple, collée sur l'insert préalablement moulé.

Suivant un second mode, la formation de l'insert et la fixation de la peau sur ce dernier sont réalisées simultanément, notamment dans un même moule.

Bien que satisfaisants dans certains cas, les procédés correspondants à ce second mode permettent uniquement de réaliser des panneaux présentant une peau uniforme. En effet, ils ne sont pas prévus pour la fabrication d'inserts revêtus de plusieurs pièces de nature différente disposées côte à côte.

Afin de remédier à cet inconvénient, on a imaginé un procédé dans lequel la peau est préalablement constituée, à plat, par assemblage des différentes pièces qui la composent. Ladite peau est ensuite appliquée sur l'insert, soit après moulage, soit simultanément au moulage de ce dernier.

Toutefois, dans le cas où les matériaux utilisés pour les pièces constituant la peau ne sont pas étirables à froid, un tel procédé présente l'inconvénient de ne permettre la fabrication que de panneaux plats.

De plus, les matériaux utilisables pour réaliser les pièces constituant la peau sont limités. En effet, ces derniers doivent être compatibles entre eux pour permettre leur assemblage côte à côte.

Le but de la présente invention est de proposer un procédé de fabrication d'un panneau multicouche qui pallie les inconvénients précités et permettent d'obtenir un panneau présentant, au moins en partie, un profil en creux et/ou en bosse et muni d'une peau constituée de plusieurs pièces de nature différente disposées côte à côte.

Un autre but de la présente invention est de proposer un procédé de fabrication d'un panneau multicouche qui permette d'utiliser des matériaux non étirables à froid pour constituer la peau.

Un autre but de la présente invention est de proposer un procédé de fabrication d'un panneau multicouche qui permette d'utiliser côte à côte de nombreux matériaux de nature différente pour constituer la peau, même si ces derniers ne sont pas compatibles entre eux, par exemple, par collage et/ou soudage.

Un autre but de la présente invention est de proposer un procédé de fabrication d'un panneau multicouche qui permette d'obtenir entre les différentes pièces disposées côte à côte, pour constituer sa peau, une jonction nette et esthétique.

D'autres buts et avantages de la présente invention apparaîtront au cours de la description qui va suivre qui n'est donnée qu'à titre indicatif et qui n'a pas pour but de la limiter.

La présente invention concerne un procédé de fabrication d'un panneau multicouche, notamment destiné à l'habillage intérieur des carrosseries de véhicules, constitué d'un insert et d'une peau, ledit panneau présentant, au moins en partie, des déformations en creux et/ou en bosse, plus ou moins importantes, suivant un profil déterminé, dans lequel on met en oeuvre un moule comprenant au moins deux parties, caractérisé par le fait que:
- on prévoit ladite peau en au moins deux pièces de nature différente, au voisinage l'une de l'autre, et :
- on préforme préalablement au moins la ou lesdites pièces prévues au niveau desdites déformations sensiblement suivant ledit profil déterminé,
- on place la ou lesdites pièces préformées dans ledit moule, au moins au niveau d'une zone prédéterminée localisée en fonction desdites déformations,
- on place la ou les éventuelles autres pièces de la peau dans ledit moule,
- on place ledit insert, prévu déformable, sous ladite peau,
- on comprime ledit insert contre ladite peau,
de manière à obtenir un panneau multicouche dont les différentes pièces de la peau épousent parfaitement l'insert tout le long de son profil.

La présente invention sera mieux comprise à la lecture de la description qui va suivre accompagnée des dessins en annexe qui en font partie intégrante.

La figure 1 présente, de manière schématique, une portière de véhicule munie d'un exemple de panneau multicouche obtenu par un procédé conforme à l'invention.

La figure 2 illustre, en vue de coupe, une des étapes d'un exemple de mise en oeuvre du procédé conforme à l'invention.

La figure 3 illustre, en vue éclatée, les différentes pièces constituant la peau du panneau représenté à la figure 1.

La figure 4 illustre, en vue de coupe, une des étapes d'un exemple de mise en oeuvre du procédé conforme à l'invention, ultérieure à celle représentée à la figure 2.

La figure 5 illustre, en vue de coupe, une des étapes d'un exemple de mise en oeuvre du procédé conforme à l'invention, ultérieure à celle représentée à la figure 4.

Les figures 6 à 8, détaillent, en vue de coupe, une région, repérée à la figure 4, du panneau multicouche représenté à la figure 1.

La présente invention concerne un procédé de fabrication d'un panneau multicouche, notamment destiné à l'habillage intérieur des carrosseries de véhicules.

De manière générale, elle trouvera ses applications, par exemple, dans tous les domaines de l'activité économique dans lesquels on souhaite fabriquer et/ou utiliser des surfaces habillées de revêtement, notamment agréables au toucher et/ou présentant un aspect esthétique.

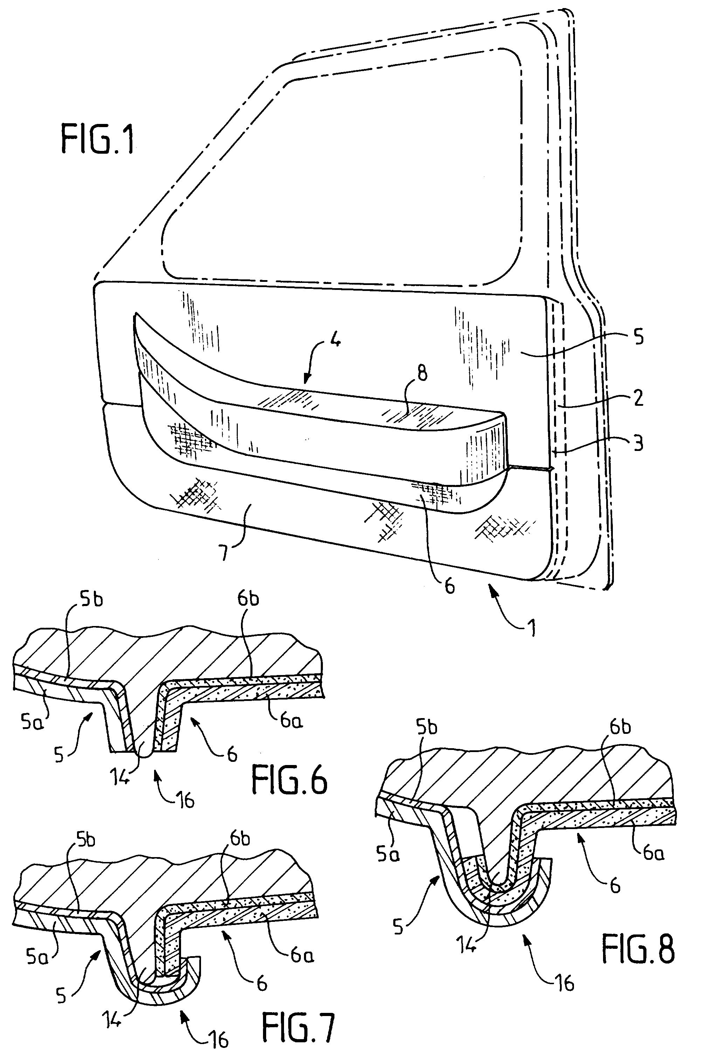

Comme représenté à la figure 1, on obtient, selon l'exemple de mise en oeuvre du procédé de fabrication conforme à l'invention illustré, un panneau multicouche 1 constitué d'un insert 2 et d'une peau 3, notamment d'aspect esthétique et/ou offrant un contact moelleux.

Comme figuré, le panneau 1 présente, au moins en partie, des déformations 4 en creux et/ou en bosse, plus ou moins importantes, suivant un profil déterminé.

Selon l'invention, on prévoit la peau 3 en au moins deux pièces de nature différente, au voisinage l'une de l'autre. Ainsi, l'une au moins est prévue, par exemple, au moins en partie, au niveau des déformations 4.

Suivant l'exemple particulier de panneaux illustrés, la peau 1 est constituée, notamment, de trois pièces 5, 6, 7 côte à côte. Au niveau de la pièce 5, le panneau 1 présente, par exemple, une déformation 4 en forme d'accoudoir 8.

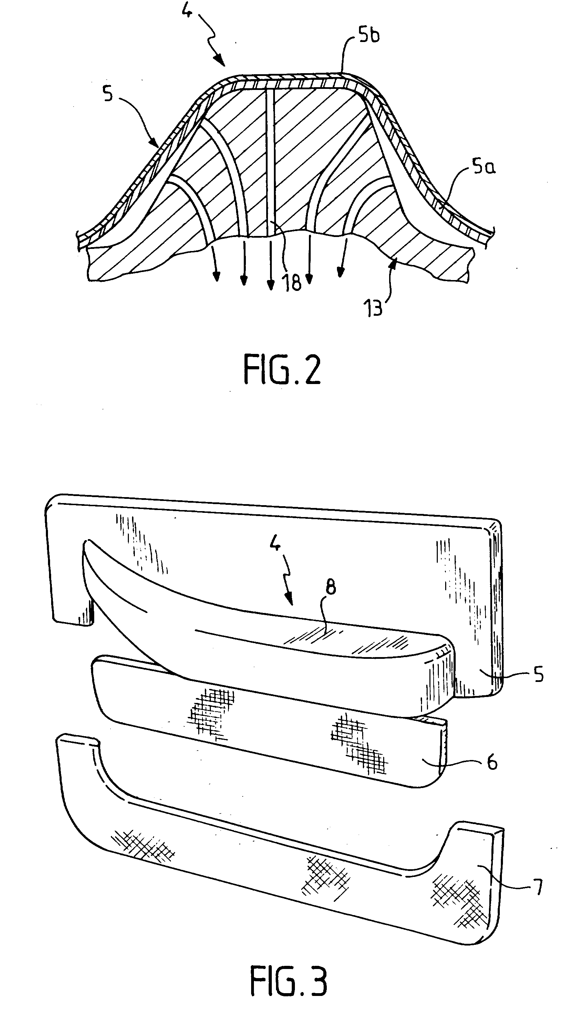

Comme représenté à la figure 2, on préforme préalablement au moins la ou lesdites pièces prévues au niveau des déformations 4, sensiblement suivant ledit profil à déterminer.

Selon l'exemple particulier de mise en oeuvre du procédé conforme à l'invention illustré, seule la pièce 5 est préformée préalablement. Les pièces 6 et 7 pouvant être obtenues par toutes autres techniques connues de l'homme de l'art. Toutefois, cet exemple n'est aucunement limitatif et les pièces 6 et/ou 7 peuvent être également, éventuellement, préformées.

On obtient ainsi, comme représenté à la figure 3, par exemple, des pièces 5, 6, 7, aptes à constituer ultérieurement la peau 1.

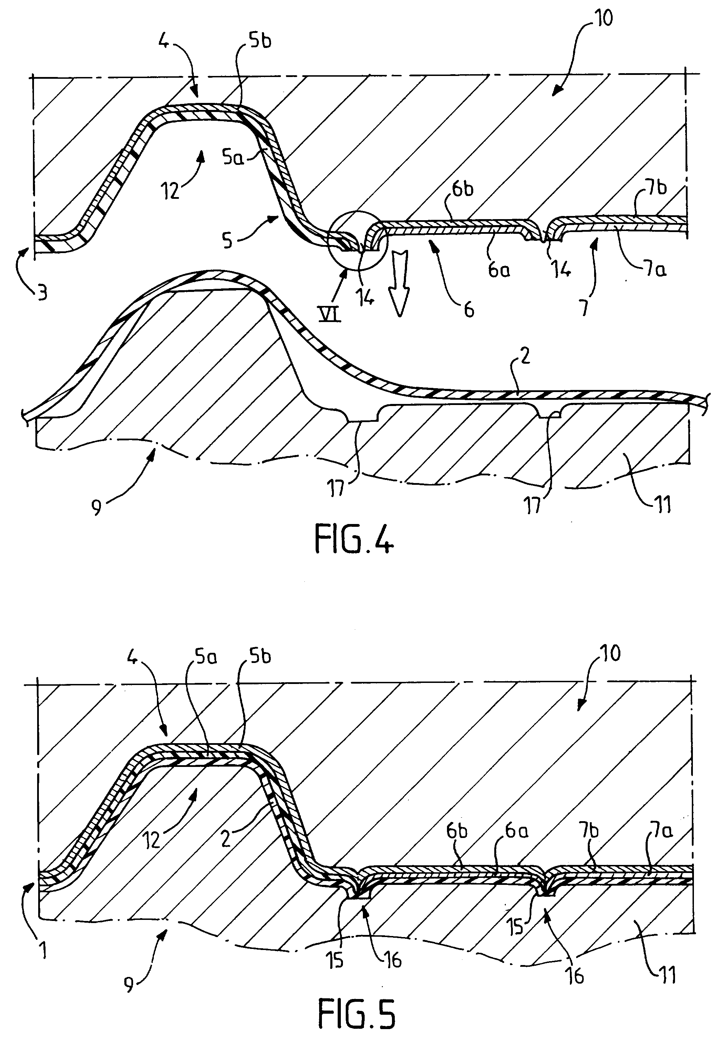

Si l'on se reporte maintenant aux figures 4 et 5, on constate que l'on met en oeuvre, selon l'invention, un moule 9 comprenant au moins deux parties 10, 11.

Comme représenté à la figure 4, on place la ou lesdites pièces 5 préformées dans ledit moule 9, au moins au niveau d'une zone prédéterminée 12 localisée en fonction des déformations 4 que l'on souhaite obtenir.

Dans les cas où toutes les pièces constituant la peau 1 ne sont pas préformées, on place la ou lesdites autres pièces 6, 7 dans ledit moule 9.

Selon l'invention, on place également ledit insert 2, prévu déformable, sous la peau 3, par exemple préalablement constituée tel qu'indiqué ci-dessus.

Comme représenté à la figure 5, on comprime alors l'insert 2 contre la peau 3 de manière à obtenir un panneau multicouche 1 dont les différentes pièces 5, 6, 7 de ladite peau 3 épouse parfaitement ledit insert 2 tout le long de son profil.

Dans l'étape illustrée à la figure 2, on réalise la pièce préformée 5, par exemple, par thermoformage. Pour cela, ladite pièce 5 est constituée, par exemple, de matériau déformable à chaud, c'est-à-dire apte à prendre, notamment sous l'effet de la chaleur, une forme donnée et à la conserver après refroidissement. Par déformable, on entend, notamment, apte à être étiré suivant au moins deux directions.

Suivant l'exemple particulier de réalisation illustré, ledit thermoformage préalable est constitué par moulage sous vide. Ainsi, selon des techniques connues de l'homme de l'art, la pièce 5 est, notamment, préchauffée et positionnée sur un moule 13 présentant, au moins en partie, ledit profil déterminé du panneau 1. Le vide est ensuite réalisé dans ledit moule 13, par exemple, grâce à des canaux 18 reliés à une source de dépression non représentée. La pièce 5 est ainsi mise en forme.

Selon un autre mode de réalisation, ladite pièce 5 pourrait également, notamment, être réalisée par thermo-compression.

En ce qui concerne les étapes illustrées aux figures 4 et 5, l'insert 2 est comprimé contre la peau 3, par exemple, par thermo-compression.

Dans le moule 9, la ou lesdites zones prédéterminées 12, dans lesquelles on place la ou lesdites pièces préformées sont constituées, notamment, d'une des deux parties 10 dudit moule 9, présentant en négatif ledit profil déterminé du panneau 1, et de l'autre partie 11, présentant en vis-à-vis ledit profil en positif.

Avant d'être placées dans le moule 9, les pièces 5, 6, 7 sont, par exemple, ébarbées.

Selon un exemple de mise en oeuvre, on maintient ensuite au moins lesdites pièces 5, 6, 7, contre ladite partie 10 du moule 9 présentant ledit profil à déterminer en négatif.

De plus, selon cet exemple, lesdites pièces 5, 6; 7 de la peau 3 sont maintenues, notamment, au voisinage l'une de l'autre.

Ladite peau 3 est ainsi assemblée et maintenue sur la partie 10 du moule 9 présentant le profil déterminé du panneau 1 en négatif.

L'insert 2, par exemple préchauffé à une température apte à permettre son formage à chaud, est alors, notamment ultérieurement, mis en place dans le moule 9, par exemple entre la peau 3 et l'autre partie 11 dudit moule 9.

Le maintien de la peau 3 dans le moule 9 est réalisé, notamment, par aspiration de ses pièces 5, 6, 7.

Si l'on se reporte maintenant aux figures 6 à 8, on constate que les bords adjacents des différentes pièces 5, 6, 7 de la peau 3 sont positionnés, par exemple, de part et d'autre de protubérances 14 de ladite partie 10 du moule 9 présentant ledit profil en négatif. Ces protubérances 14 servent, notamment, à former dans l'insert 2 des gorges 15 constituant une zone de raccord 16 entre lesdits bords adjacents.

En effet, lors de la compression, ces derniers sont, par exemple, insérés dans la gorge 15 et pressés l'un contre l'autre, compte tenu de leur élasticité, une fois le panneau 1 retiré du moule 9. Les imperfections de liaison entre les pièces 5, 6, 7 sont ainsi cachées à la vue. De plus, le risque de glissement relatif de ces dernières l'une par rapport à l'autre est diminué.

Selon l'exemple de mise en oeuvre illustré, la partie 11 du moule 9 présentant ledit profil déterminé en positif, est munie, notamment, de cavités 17, illustrées aux figures 4 et 5, prévues en vis-à-vis des protubérances 14 afin, par exemple, de faciliter la formation des gorges 15.

Selon les exemples de mise en oeuvre détaillés aux figures 7 et 8, les bords adjacents des pièces 5, 6, 7 se chevauchent, notamment à l'intérieur des gorges 15 de manière à renforcer le raccord entre lesdites pièces.

En ce qui concerne les matériaux utilisés, on pourra choisir, à titre d'exemple, pour la peau 1, un matériau, notamment bicouche comprenant une base 5a, 6a, 7a, de plastique expansé accouplé à une couche externe 5b, 6b, 7b, d'aspect esthétique. Il pourra s'agir, par exemple, d'un matériau, non étirable à froid mais déformable à chaud, tel que, notamment, celui connu de l'homme de l'art sous le nom de TPO. Il pourra s'agir également d'un matériau textile ou autre.

Quant à l'insert 2, il est constitué, par exemple, d'un matériau inerte incorporé dans une matrice thermoplastique. A froid, il est, notamment, rigide.

Il peut être obtenu, par exemple, par aiguilletage ou tout autre procédé apte à créer un mélange de fibres de matériau thermoplastique avec des fibres de matériau inerte, comme, par exemple, des fibres textiles, telles que du lin, de la jute ou autre, et/ou des fibres de verre et/ou autre.

On peut remarquer que l'emploi d'un insert 2 obtenu par aiguilletage est éventuellement préférable à un insert 2 extrudé. En effet, selon ce premier procédé, on obtient des fibres de matériau inerte plus longues et dont l'orientation est distribuée de manière homogène, conférant ainsi audit insert 2 des avantages du point de vue de sa résistance mécanique.

L'insert 2 obtenu par aiguilletage a en outre l'avantage d'être poreux et de permettre l'expulsion de l'air compris entre la peau 3 et ledit insert 2 lors de la compression.

Dans le cas où l'on utilise un insert 2 compact, on crée alors, par exemple, des micro-perforations, si nécessaire, dans la peau 3 afin d'éviter, comme évoqué ci-dessus, que de l'air ne reste emprisonné entre ledit insert 2 et ladite peau 3 risquant ainsi de générer des défauts d'adhésion.

A ce sujet, la peau 3 est ancrée solidement sur le support 2, notamment, grâce à l'établissement de liens chimiques et/ou physiques lors de la compression.

Pour cela, ledit insert 2 et/ou ladite peau 3 présente, par exemple, une couche supplémentaire, non représentée, apte à faciliter l'adhésion.

Naturellement, d'autres mises en oeuvre de la présente invention à la portée de l'homme de l'art auraient pu être envisagées sans pour autant sortir du cadre de la présente demande.

## Revendications

1. Procédé de fabrication d'un panneau multicouche (1), notamment destiné à l'habillage intérieur des carrosseries de véhicules, constitué d'un insert (2) et d'un peau (3), ledit panneau (1) présentant, au moins en partie, des déformations (4) en creux et/ou en bosse, plus ou moins importantes, suivant un profil déterminé, dans lequel on met en oeuvre un moule (9) comprenant au moins deux parties (10, 11), caractérisé par le fait que:
- on prévoit ladite peau (3) en au moins deux pièces (5, 6, 7) de nature différente, au voisinage l'une de l'autre et,
- on préforme préalablement au moins la ou lesdites pièces prévues au niveau desdites déformations (4), sensiblement suivant ledit profil déterminé,
- on place la ou lesdites pièces préformées dans ledit moule (9), au moins au niveau d'une zone prédéterminée (12) localisée en fonction desdites déformations (4),
- on place la ou les éventuelles autres pièces de ladite peau (3) dans ledit moule (9),
- on place le dit insert (2), prévu déformable, sous ladite peau (3),
- on comprime ledit insert (2) contre ladite peau (3),
de manière à obtenir un panneau multicouche (1) dont les différentes pièces (5, 6, 7) de la peau (3) épousent parfaitement l'insert (2) tout le long de son profil.

2. Procédé selon la revendication 1, caractérisé par le fait que l'on réalise la ou lesdites pièces préformées par thermoformage.

3. Procédé selon la revendication 2, caractérisé par le fait que ledit thermoformage préalable est effectué par moulage sous vide.

4. Procédé selon la revendication 1, caractérisé par le fait que l'on comprime l'insert (2) contre la peau (3) par thermo-compression.

5. Procédé selon la revendication 1, caractérisé par le fait que la ou lesdites zones prédéterminées (12) sont constituées d'une des deux parties (10) du moule (9), présentant en négatif, ledit profil déterminé et, de l'autre partie (11) présentant en vis-à-vis ledit profil en positif.

6. Procédé selon la revendication 5, caractérisé par le fait que l'on maintient au moins lesdites pièces préformées contre ladite partie (10) du moule (9) présentant ledit profil déterminé en négatif.

7. Procédé selon la revendication 6, caractérisé par le fait que l'on maintient les pièces (5, 6, 7) de la peau (3), au voisinage l'une de l'autre, sur ladite partie (10) du moule (9) présentant ledit profil déterminé en négatif.

8. Procédé selon la revendication 7, caractérisé par le fait que les bords adjacents des différentes pièces (5, 6, 7) de la peau (3) sont positionnés de part et d'autre de protubérances (14) de ladite partie (10) du moule (9) présentant ledit profil en négatif, apte à former dans l'insert (2) des gorges (15) constituant une zone de raccord (16) entre lesdits bords adjacents.

9. Procédé selon la revendication 8, caractérisé par le fait que lesdits bords adjacents se chevauchent à l'intérieur desdites gorges (15).

10. Procédé selon la revendication 1, caractérisé par le fait que l'on préchauffe l'insert (2) à une température apte à permettre son formage à chaud.
